## Europäisches Patentamt
## European Patent Office
## Office européen des brevets

(19)

(11) Numéro de publication: **0 123 569**
**B1**

# FASCICULE DE BREVET EUROPÉEN

(12)

(45) Date de publication du fascicule du brevet:
**19.04.89**

(51) Int. Cl.⁴: **F 15 D 1/04,** G 01 F 15/00,
F 16 L 55/02

(21) Numéro de dépôt: **84400439.0**

(22) Date de dépôt: **06.03.84**

(54) **Appareil tranquilliseur pour régulariser le profil des vitesses d'un fluide en encoulement.**

(30) Priorité: **15.03.83 FR 8304197**

(43) Date de publication de la demande:
**31.10.84 Bulletin 84/44**

(45) Mention de la délivrance du brevet:
**19.04.89 Bulletin 89/16**

(84) Etats contractants désignés:
**BE CH DE GB IT LI NL SE**

(56) Documents cité:
**CH-A-238 569**
**DE-B-2 544 457**
**FR-A-466 752**
**FR-A-893 313**
**FR-A-1 395 409**
**FR-A-2 018 679**
**GB-A-1 228 223**
**US-A-2 830 617**
**US-A-3 043 139**

(73) Titulaire: **SCHLUMBERGER INDUSTRIES, 50,
avenue Jean Jaurès, F-92120 Montrouge (FR)**

(72) Inventeur: **Lett, Roland, 2, rue Léonard de Vinci,
F-91330 Yerres (FR)**

(74) Mandataire: **Dronne, Guy, Giers Schlumberger 12
Place des Etats- Unis B.P. 121, F-92124 Montrouge
(FR)**

EP 0 123 569 B1

LIBER, STOCKHOLM 1989

## Description

La présente invention est relative à des appareils dits tranquilliseurs, destinés à être montés sur une conduite parcourue par un fluide en vue d'obtenir un écoulement à profil de vitesse régulier.

On sait que les tranquilliseurs sont généralement utilisés pour régulariser le profil des vitesses d'un fluide en amont d'un appareil de mesure de débit monté sur une conduite parcourue par le fluide. Il existe en effet deux types de défaut que peut présenter un écoulement et qui sont gênants pour la mesure du débit. Un premier défaut provient de la dissymétrie dans la distribution des vitesses du fluide dans un plan perpendiculaire à la direction de l'écoulement. Une telle dissymétrie est par exemple provoquée par un coude de la conduite ou par l'obturateur d'une vanne à demi-fermée, par exemple une vanne à coin. Pour un appareil de mesure de débit monté sur la conduite et alimenté par un écoulement de fluide ainsi perturbé, par exemple un compteur de Woltmann, cette dissymétrie entraîne notamment une usure prématurée du compteur par effet de réaction latérale sur tout le pivotage du rotor ainsi qu'une erreur de mesure. Un autre défaut consiste dans l'existence de tourbillons coaxiaux à la conduite qui peuvent aussi bien prendre naissance spontanément au cours de l'écoulement du fluide qu'après la traversée d'une vanne a demi-fermée comme précédemment. Ce défaut affecte sensiblement la mesure du débit en perturbant la vitesse de rotation du rotor. En fait, un type de défaut n'existe jamais isolément, mais les deux défauts sont toujours présents conjointement dans les turbulences qui agitent le fluide. On a déjà proposé de remédier à ces défauts en plaçant sur la conduite en amont du compteur un transuilliseur de type à évasement comportant une chambre cylindrique de diamètre supérieur à celui de la conduite. Ce genre de tranquilliseur est efficace contre les défauts de dissymétrie mentionnés en premier lieu, mais n'a guère d'action sur les tourbillons de sorte que le fluide sortant du tranquilliseur présente encore des tourbillons à peine atténués. En revanche, les tranquilliseurs dits à nid d'abeilles procurent un excellent amortissement des tourbillons, mais sont peu efficaces contre les défauts de dissymétrie du profil des vitesses, chaque canal le constituant affectant relativement peu la composante de vitesse axiale du filet fluide qui le traverse. En outre, la fabrication d'une telle structure et son montage dans une conduite sont onéreux.

On connaît par ailleurs par le brevet FR-A-466 752 un appareil pour le transport de matières solides ou fluides dans un tuyau à section circulaire et comprenant des nervures longitudinales internes orientées radialement. Cet appareil connu est cependant peu efficace pour éliminer les tourbillons et en outre ne permet pas de lutter contre les défauts de symétrie du profil des vitesses.

L'invention a donc pour objet un tranquilliseur destiné à régulariser le profil des vitesses d'un écoulement de fluide dans une conduite.

Selon un premier mode de réalisation la chambre cylindrique du tranquilliseur comporte aux moins deux ensembles de nervures internes s'étendant chacun sur une fraction de la longueur de la chambre, les nervures d'un même ensemble étant orientées radialement et régulièrement réparties à sa périphérie, les nervures d'un même ensemble étant décalées angulairement par rapport à celles d'un autre ensemble. Ainsi on corrige le défaut de symétrie de l'écoulement et on diminue sensiblement l'effet des tourbillons qui peuvent affecter cet écoulement. Un tel système permet d'éliminer totalement la formation des tourbillons dans les cas sévères.

De plus, la chambre peut présenter un diamètre supérieure à celui de la conduite. La dimension radiale des nervures peut être telle que les nervures laissent libre un passage cylindrique axiale de rayon inférieur on rayon de la conduite. Une telle structure permet en outre d'éliminer totalement les dissymétries du profil des vitesses.

Ces tranquilliseurs, d'un encombrement raisonnable, ont l'avantage de pouvoir être réalisés de façon économique soit en éléments indépendants du compteur, soit intégré directement à l'enveloppe du compteur, sa structure pouvant être obtenue directement de fonderie sans nécessiter d'usinage particulier, ou par assemblage d'éléments usinés ou non.

Un tel tranquilliseur est avantageusement utilisable sur des conduites d'eau équipées avec des compteurs de moyens calibres.

L'invention sera mieux comprise en se référant à la description suivante et au dessin annexé qui représente à titre d'exemples non limitatifs, deux modes de réalisation d'un appareil conforme à l'invention. Sur ce dessin:

- les figures 1 et 2 sont des vues respectivement en coupe axiale et transversale d'un appareil suivant un premier mode de réalisation.

- la figure 3 est une coupe d'un appareil intégré à l'enveloppe elle-même d'un compteur d'eau.

- les figures 4 et 5 sont des vues analogues à celles des figures 1 et 2 d'un appareil selon un deuxième mode de réalisation.

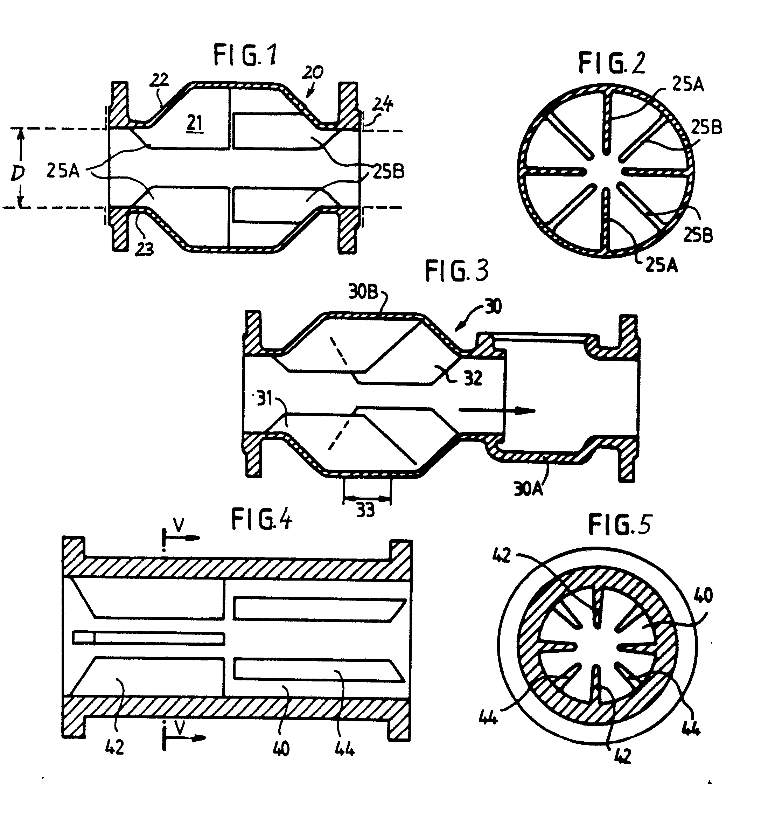

En se référant aux figures 1 et 2 selon le premier mode de réalisation, le tranquilliseur 20 comporte une chambre cylindrique 21 raccordée à ses extrémités par des parties coniques 22 à des parties cylindriques 23, de même diamètre D que celui de la conduite à section circulaire (figurée en pointillé) sur laquelle l'appareil 20 doit être monté, et munies de brides 24 à cet effet.

La chambre 21 de diamètre supérieur au diamètre D, présente successivement deux ensembles de nervures 25A, 25B, chacun s'étendant longitudinalement sur environ une moitié de la longueur de la chambre, chaque ensemble étant angulairement décalé par rapport à l'autre d'un angle, par exemple égal à 45°, si chaque ensemble comprend quatre nervures. Ce mode de réalisation permet de s'affranchir totalement des effets de tourbillons même dans les cas les plus sévères.

En effet, si à l'entrée du dispositif de régularisation il y a un phénomène de tourbillon important, des tourbillons partiels peuvent prendre naissance dans chaque zone limitée par deux nervures consécutives du premier ensemble de nervures. Le deuxième ensemble de nervures qui est décalé angulairement par rapport au premier permet, à sa sortie d'annuler ces tourbillons partiels limités.

Dans un exemple pratique de réalisation, l'appareil a une longueur axiale égale à 3D, la chambre cylindrique ayant une longueur égale à D et un diamètre égal à 2D. La dimension radiale des nervures est choisie égale à 3D/4 aissant un passage libre central de diamètre D/2.

Ces dimensions ne sont, bien entendu, données qu'à titre d'exemple indicatif et d'autres proportions peuvent convenir sans sortir du domaine de l'invention.

Un tel tranquilliseur peut être monté en tant qu'élément indépendant en amont d'un appareil de mesure de débit de fluide, tel qu'un compteur d'eau, mais il peut aussi être intégré dans le compteur d'eau et faire partie intégrante de la bache ou enveloppe du compteur.

En outre, on voit que les extrémités externes des deux groupes de nervures 25A et 25B sont inclinées par rapport à l'axe de la chambre. Au contraire, les extrémités internes sont sensiblement orthogonales à cet axe.

Une variante du premier mode de réalisation suivant cette dernière conception est représentée à la figure 3. La pièce unique 30 comporte deux parties solidaires 30A, 30B, l'une 30A constituant l'enveloppe du compteur, l'autre 30B constituant le tranquilliseur, qui présente dans cet exemple deux ensembles de nervures 31, 32 chevauchant partiellement selon la direction de l'axe de la chambre. Ainsi la chambre comprend une zone centrale 33 où il y a chevauchement des deux ensembles de nervures et deux zones où l'on trouve uniquement l'ensemble de nervures 31 ou l'ensemble de nervures 32. Dans ce mode de réalisation, de préférence, les extrémités internes et externes des deux ensembles de nervures sont inclinées par rapport à l'axe de la chambre. Ce sont ces extrémités inclinées qui forment la plus grande partie de la zone de chevauchement 33.

Pour obtenir un fonctionnement correct de l'ensemble tranquilliseur-compteur, il faudra naturellement veiller, lors du branchement sur la conduite, à monter le tranquilliseur en amont du compteur, la flèche indiquant le sens d'écoulement du liquide.

Le deuxième mode de réalisation de l'invention est représenté sur les figures 4 et 5. La chambre cylindrique 40 a le même diamètre que le reste de la canalisation. A l'intérieur de cette chambre 40 on trouve deux ensembles de nervures respectivement référencés 42 et 44. Les nervures d'un même ensemble sont espacées angulairement de 90°. De plus, comme dans le cas des figures 3 à 5, les nervures de l'ensemble 42 sont angulairement décalées de 45° par rapport à celles de l'ensemble 44. Sur la figure 4 il n'y a pas de chevauchement longitudinal entre les nerrvres des ensembles 42 et 44, cependant, comme dans le cas de la figure 3, les deux ensembles de nervures pourraient se chevaucher. De plus, les extrémités internes et externes des deux ensembles de nervures pourraient être inclinées par rapport à l'axe de la chambre.

Un tel système de régularisation du profil des vitesses est particulièrement bien adapté au cas où l'écoulement du fluide présente un phénomène de tourbillons important mais une faible dissymétrie dans la distribution des vitesses du fluide dans un plan perpendiculaire à la section d'écoulement.

## Revendications

1. Appareil destiné à être monté sur une conduite à section circulaire parcourue par un fluide en vue d'obtenir un écoulement à profil de vitesse régulier et comportant une chambre cylindrique (21, 30B, 40) coaxiale à la conduite, du type comprenant des nervures longitudinales internes (25A, 25B; 31, 32; 42, 44) orientées radialement, caractérisé en ce que ladite chambre (21, 30B, 40) comporte au moins deux ensembles de nervures internes (25A, 25B; 31, 32; 42, 44) s'étendant chacun sur une fraction de la longueur de ladite chambre, les nervures d'un même ensemble étant orientées radialement et régulièrement réparties à sa périphérie, les nervures d'un même ensemble étant décalées angulairement par rapport à celles d'un autre ensemble.

2. Appareil selon la revendication 1, caractérisé en ce que le rayon de ladite chambre (21, 30B) est supérieur à celui de la conduite et en ce que la dimension radiale des nervures (25A, 25B; 31, 32) est telle que les nervures laissent libre un passage cylindrique axial de rayon inférieur au rayon de la conduite.

3. Appareil selon l'une quelconque des revendications 1 et 2, caractérisé en ce que les nervures (31) d'un ensemble chevauchent partiellement celles (32) d'un autre ensemble selon la direction de l'axe de ladite chambre.

4. Appareil suivant la revendication 2, caractérisé en ce que ledit passage axial cylindrique libre a un rayon de l'ordre de la moitié du rayon de la conduite.

5. Appareil suivant l'une des revendications précédentes, caractérisé en ce qu'il fait partie intégrante (30B) de l'enveloppe (30A) d'un compteur.

## Patentansprüche

1. Gerät, das dazu bestimmt ist, in einer einen Funden Querschnitt aufweisenden Leitung montiert zu werden, welche von einem fluiden Medium durchflossen wird, damit ein Abfließen mit gleichmäßigem Geschwindigkeitsprofil erhalten wird, und mit einer zylindrischen Kammer (21, 30B 40), welche koaxial zu der Leitung liegt und vom Typ mit inneren Längsrippen (25A 25B; 31, 32; 42, 44) ist, welche radial orientiert sind, dadurch gekennzeichnet, daß die genannte Kammer (21, 30B, 40) wenigstens zwei Gruppen interner Rippen (25A, 25B; 31, 32; 42, 44) umfaßt, vowon jede sich über einen Bruchteil der Länge der genannten Kammer erstreckt, wobei die Rippen einer selben Gruppe radial orientiert und auf ihrem Umfang gleichmäßig verteilt sind, und die Rippen einer selben Gruppe in Bezug auf diejenigen einer anderen Gruppen winkelversetzt sind.

2. Gerät nach Anspruch 1, dadurch gekennzeichnet, daß der Radius der genannten Kammer (21, 30B) größer ist als derjenige der Leitung und daß die radiale Abmessung der Rippen (25A, 25B; 31, 32) derart ist, daß die Rippen einen axialen zylindrischen Durchgang frei lassen, dessen Radius kleiner als derjenige der Leitung ist.

3. Gerät nach einem der Ansprüche 1 und 2, dadurch gekennzeichnet, daß die Rippen (31) einer Gruppe diejenigen (32) einer anderen Gruppe in Achsenrichtung der genannten Kammer teilweise überlappen.

4. Gerät nach Anspruch 2, dadurch gekennzeichnet, daß der genannte freie zylindrische axiale Durchgang einen Radius in der Größenordnung von der Hälfte des Radius der Leitung aufweist.

5. Gerät nach einem der vorstehenden Ansprüche, dadurch gekennzeichnet, daß es ein integrierender Teil (30B) der Hülle (30A) eines Zählers ist.

## Claims

1. Apparatus for mounting on a circular section fluid flow duct for the purpose of obtaining a flow having a regular speed profile, the apparatus comprising a cylindrical chamber (21, 30B, 40) which is coaxial with the duct, the chamber being of the type comprising radially directed internal longitudinal ribs (25A, 25B; 31, 32; 42, 44), the apparatus being characterized in that said chamber (21, 30B, 40) includes at least two sets of internal ribs (25A, 25B; 31, 32; 42, 44) each extending along a fraction of the length of said chamber, with the ribs of a same set being radially oriented and regularly distributed around its periphery, and with the ribs of one set being angularly offset relative to the ribs of another set.

2. Apparatus according to claim 1, characterized in that the radius of said chamber (21, 30B) is greater than the radius of the duct, and in that the radial size of the ribs (25A, 25B; 31, 32) is such that the ribs leave free an dial cylindrical passage whose radius is less than the radius of the duct.

3. Apparatus according to claim 1 or 2, characterized in that the ribs (31) of one set partially overlap the ribs (32) of another set in the axial direction of said chamber.

4. Apparatus according to claim 2, characterized in that said free cylindical axial passage has a radius of about one half the radius of the duct.

5. Apparatus according to any preceding claim, characterized in that it constitutes an integral portion (30B) of the casing (30A) of a meter.

FIG.1

FIG.2

FIG.3

FIG.4

FIG.5